Europäisches Patentamt

European Patent Office

Office européen des brevets

(11) Veröffentlichungsnummer: **0 479 251 A2**

## (12) EUROPÄISCHE PATENTANMELDUNG

(21) Anmeldenummer: **91116789.8**

(22) Anmeldetag: **01.10.91**

(51) Int. Cl.5: **B60H 1/32**, B60N 3/10

(30) Priorität: **01.10.90 DE 4031029**

(43) Veröffentlichungstag der Anmeldung:
**08.04.92 Patentblatt 92/15**

(84) Benannte Vertragsstaaten:
**DE ES FR GB IT NL SE**

(71) Anmelder: **unitechnica Mobilkälte GmbH
Robert-Bosch-Strasse 18**
**W-7141 Möglingen(DE)**

(72) Erfinder: **Bergmann, Jürgen
Gutenbergstrasse 16
W-7145 Markgröningen(DE)**

(74) Vertreter: **Schwan, Gerhard, Dipl.-Ing.
Elfenstrasse 32
W-8000 München 83(DE)**

(54) **Kühlvorrichtung zum Einbau in Kraftfahrzeuge.**

(57) Kühlvorrichtung zum Einbau in Kraftfahrzeuge, mit einem Kälteerzeuger und einem damit in Wirkungsverbindung stehenden Kühlraum zur Aufnahme von Kühlgut. Der Kälteerzeuger steht mit einer Aufnahmekammer in Wirkungsverbindung, die ebenso wie der Kälteerzeuger selbst zur festen Montage in dem Kraftfahrzeug ausgelegt ist. Der Kühlraum ist in einer transportablen Kühlbox ausgebildet, die mit dem Kälteerzeuger in lösbarer Verbindung steht und die aus der Aufnahmekammer beliebig herausnehmbar bzw. in die Aufnahmekammer beliebig einsetzbar ist.

FIG. 2

EP 0 479 251 A2

Die Erfindung betrifft eine Kühlvorrichtung zum Einbau in Kraftfahrzeuge, mit einem Kälteerzeuger und einem damit in Wirkungsverbindung stehenden Kühlraum zur Aufnahme von Kühlgut.

Vorrichtungen dieser Art sind beispielsweise aus der DE 36 39 089 A1 bekannt. Sie erlauben es, beispielsweise einen gewissen Vorrat an Getränken während der Fahrt kühl zu halten. Die Einsatzmöglichkeiten solcher Kühlvorrichtungen sind jedoch beschränkt.

Der Erfindung liegt die Aufgabe zugrunde, eine Kühlvorrichtung zum Einbau in Kraftfahrzeuge zu schaffen, die einen wesentlich erweiterten Anwendungsbereich hat.

Diese Aufgabe wird ausgehend von einer Kühlvorrichtung der eingangs genannten Art erfindungsgemäß dadurch gelöst, daß der Kälteerzeuger mit einer Aufnahmekammer in Wirkungsverbindung steht, die ebenso wie der Kälteerzeuger selbst zur festen Montage in dem Kraftfahrzeug ausgelegt ist, und daß der Kühlraum in einer transportablen Kühlbox ausgebildet ist, die mit dem Kälteerzeuger in lösbarer Verbindung steht und die aus der Aufnahmekammer beliebig herausnehmbar bzw. in die Aufnahmekammer beliebig einsetzbar ist.

Bei in die Aufnahmekammer eingesetzter Kühlbox kann Kühlgut, das in die Kühlbox eingebracht ist, in herkömmlicher Weise heruntergekühlt und/oder kühl gehalten werden. Die transportable Kühlbox erlaubt es dem Anwender dann aber, bei Verlassen des Fahrzeugs das Kühlgut in der Kühlbox mitzuführen, beispielsweise zum Strand, auf den Golfplatz oder zu anderen Freizeitaktivitäten. Dabei kann das Kühlgut, wenn die Kühlbox in weiterer Ausgestaltung der Erfindung als wärmeisolierter Behälter ausgebildet ist, über eine beträchtliche Zeitspanne weiterhin kühlgehalten werden. Durch die Aufhebung der Bindung der Kühlbox an das Kraftfahrzeug wird heruntergekühltes Kühlgut auch vom Kraftfahrzeug entfernt bereitgestellt. Die Kühlbox selbst bleibt dabei handlich und leicht, weil der Kälteerzeuger und zugeordnete Aggregate fest eingebaut im Kraftfahrzeug verbleiben.

Die Kühlbox ist zweckmäßig mit einem aufklappbaren Deckel versehen, der einerseits einen bequemen Zugriff zum Kühlraum erlaubt, andererseits aber Kälteverlusten entgegenwirkt.

Vorteilhaft ist der Kälteerzeuger in einem Gehäuse untergebracht, in dem sich auch die Aufnahmekammer für die transportable Kühlbox befindet. Dies führt zu einer wesentlichen Erleichterung der Montage der Kühlvorrichtung im Kraftfahrzeug. Dieses Gehäuse kann zweckmäßig auch eine Steuer- und/oder Regeleinrichtung für den Kälteerzeuger und alle Bedienelemente aufnehmen.

Dem Kälteerzeuger ist vorteilhaft eine Kaltluftumwälzeinrichtung zugeordnet, die, wenn die Kühlbox in die Aufnahmekammer eingesetzt ist, über einen Umwälzkreis Kaltluft in die Kühlbox eintreten läßt und Luft aus der Kühlbox wieder abführt. Dabei ist vorzugsweise die Kühlbox mit einem Kaltlufteinlaß und einem Luftauslaß versehen, die beim Einsetzen der Kühlbox in die Aufnahmekammer an den Umwälzkreis selbsttätig angeschlossen werden und die beim Herausnehmen der Kühlbox aus der Aufnahmekammer selbsttätig verschlossen werden. Dadurch wird Kälteverlusten bei aus der Aufnahmekammer herausgenommener Kühlbox vorgebeugt.

Die Steuer- und Regeleinrichtung des Kälteerzeugers kann zweckmäßig mit zwei Thermostaten ausgestattet sein, von denen der eine auf eine feste Solltemperatur, beispielsweise + 2°C, eingestellt ist, auf die der Kühlraum bei beabsichtigter Entnahme der Kühlbox heruntergekühlt wird, während der andere Thermostat auf eine innerhalb eines vorgesehenen Bereichs, beispielsweise von + 4°C bis + 12°C, verstellbare Solltemperatur einstellbar ist. Dadurch wird es dem Benutzer auf einfache Weise möglich, den Kühlraum und im Kühlraum untergebrachtes Kühlgut auf eine verhältnismäßig tiefe Temperatur herunterzukühlen, wenn es beabsichtigt ist, die Kühlbox später nach Verlassen des Fahrzeuges mitzunehmen.

Dem die feste Solltemperatur vorgebenden Thermostaten kann zweckmäßig eine Signallampe zugeordnet sein, die erkennen läßt, wenn der Kühlraum die die Entnahme der Kühlbox vorgesehene Temperatur erreicht hat.

Der Kälteerzeuger kann grundsätzlich in jeder beliebigen Weise aufgebaut sein. Insbesondere kann der Kälteerzeuger als Kompressions-Kältemaschine, als Adsorber-Kältemaschine oder als Peltier-Kältemaschine ausgebildet sein.

Ein bevorzugtes Ausführungsbeispiel der Erfindung ist nachstehend unter Bezugnahme auf die Zeichnungen näher erläutert. Es zeigen:

Fig. 1    eine perspektivische Ansicht des zum festen Einbau in das Kraftfahrzeug vorgesehenen Teils der Kühlvorrichtung, d.h. die Kühlvorrichtung nach Entnahme der transportablen Kühlbox;

Fig. 2    eine perspektivische Ansicht der Kühlvorrichtung mit eingesetzter Kühlbox und

Fig. 3    in größerem Maßstab eine perspektivische Ansicht nur der Kühlbox mit aufgeklapptem Deckel.

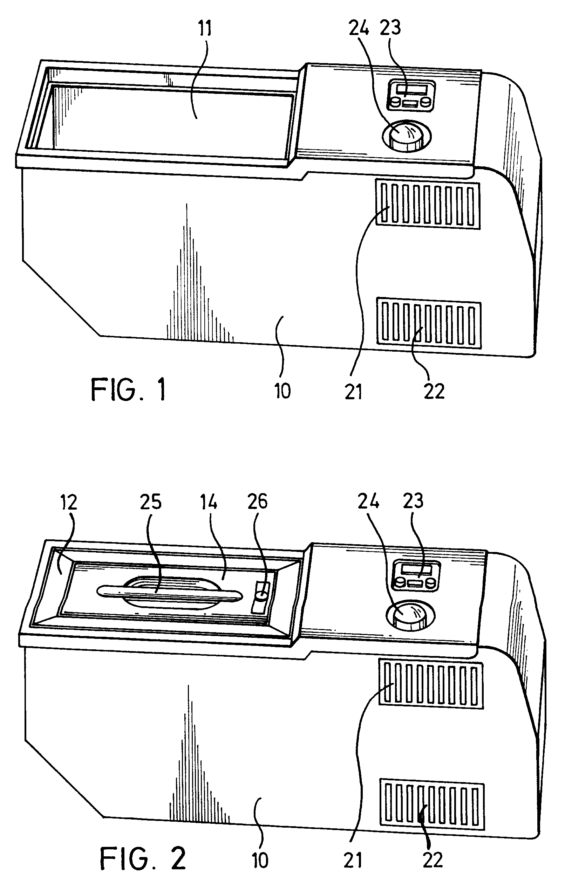

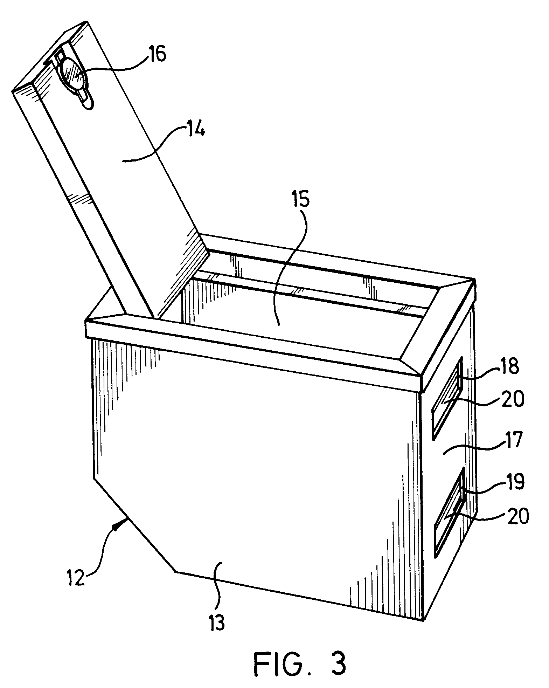

Die veranschaulichte Kühlvorrichtung weist ein Gehäuse 10 auf, dessen Außenkontur der Karosseriekontur des Kraftfahrzeuges angepaßt ist, in welches das Gehäuse 10 fest eingebaut wird. Das Gehäuse 10 bildet eine Aufnahmekammer 11 zur Aufnahme einer transportablen Kühlbox 12 (Fign. 1 und 2), die in die Aufnahmekammer 11 beliebig eingesetzt und aus der Aufnahmekammer 11 jederzeit nach Wunsch entnommen werden kann. Die Kühlbox 12 ist als wärmeisolierter Behälter mit einem Kühlboxkörper 13 und einem daran angelenkten Deckel 14 ausgebildet. Die Kühlbox 12 umschließt einen Kühlraum 15 zur Aufnahme von Kühlgut, beispielsweise Getränkeflaschen oder -dosen. Der Deckel 14 ist mit einem Verschluß 16 in Form eines Magnetverschlusses, eines Riegels oder dergleichen ausgestattet, um den Deckel 14 normalerweise in seiner Schließstellung (Fig. 2) zu halten. An der in Fig. 3 rechten Stirnseite 17 des Kühlboxkörpers 13 sind ein Kaltlufteinlaß 18 und ein Luftauslaß 19 vorgesehen. Solange die Kühlbox 12 aus der Aufnahmekammer 11 herausgenommen ist, werden der Kaltlufteinlaß 18 und der Luftauslaß 19 jeweils mittels eines Schiebers 20 verschlossen. Wenn die Kühlbox 12 in die Aufnahmekammer 11 eingesetzt wird, werden die Schieber 20 selbsttätig nach oben gedrückt, um den Kaltlufteinlaß 18 bzw. den Luftauslaß 19 freizugeben. Dazu können in der Aufnahmekammer 11 nicht näher veranschaulichte Betätigungsstifte vorgesehen sein. Beim Herausziehen der Kühlbox 12 aus der Aufnahmekammer 11 fallen die Schieber 20 wieder nach unten, wobei sie gegebenenfalls von Vorspannfedern unterstützt sein können.

Durch Hochdrücken der Schieber 20 wird die Kühlbox beim Einbringen in die Aufnahmekammer 11 selbsttätig an einen Umwälzkreis angeschlossen, in welchen ein im Gehäuse 10 untergebrachter Kälteerzeuger (nicht veranschaulicht) Kaltluft einspeist. Diese Kaltluft gelangt über den Einlaß 18 in den Kühlraum 15. Nach Durchströmen des Kühlraums 15 verläßt die Luft die Kühlbox 12 über den Auslaß 19, um von dem Kälteerzeuger im Gehäuse 16 erneut gekühlt zu werden.

Bei dem Kälteerzeuger kann es sich um eine beliebige Kältemaschine handeln, die vorzugsweise aus dem Bordnetz des Kraftfahrzeugs mit Energie versorgt wird, beispielsweise um eine Kompressions-Kältemaschine, um eine Adsorber-Kältemaschine oder um eine Peltier-Kältemaschine (vergleiche z.B. DE-OS 36 39 089). Entsprechend einer Ausführungsform der Erfindung kann der Kälteerzeuger einen zwangsbelüfteten Kondensator oder Verflüssiger, einen Verdampfer mit zugeordnetem Lüfter und eine zweckentsprechende Steuer- und/oder Regeleinrichtung aufweisen. Der Einlaß 18 und der Auslaß 19 stellen dabei eine Wirkungsverbindung mit dem Verdampfer des Kälteerzeugers her. In einer Seitenwand des Gehäuses 10 befinden sich Lüftungsgitter 21 und 22.

Die Kühlbox 12 paßt genau in die Aufnahmekammer 11. Die Kühlbox 12 kann beispielsweise zweischalig mit zwischengefügtem Wärmeisolationsmaterial ausgebildet sein. Zur Entnahme aus der Aufnahmekammer 11 kann die Kühlbox 12 an einer Handhabe 25 gefaßt werden, die an der Oberseite des Deckels 14 sitzt. Bei 26 (Fig. 2) kann eine Betätigung für den Verschluß 16 vorgesehen sein.

Die Steuer- und Regeleinrichtung des Kälteerzeugers ist zweckmäßig mit zwei Thermostaten ausgestattet, von denen der eine auf eine feste Solltemperatur eingestellt ist, auf die der Kühlraum 15 heruntergekühlt wird, wenn es beabsichtigt ist, die Kühlbox 12 zu entnehmen. Diese feste Solltemperatur kann beispielsweise auf + 2°C eingestellt sein, ein Wert, der einerseits ein Gefrieren des Kühlguts verhindert, andererseits aber für eine ausreichende Kältezufuhr zum Kühlraum 15 sorgt, um nach Entnahme der Kühlbox aus der Aufnahmekammer 11 das Kühlgut noch für eine relativ lange Zeitspanne kühl zu halten. Der andere Thermostat kann auf eine innerhalb eines vorgesehenen Bereichs verstellbare Solltemperatur einstellbar sein, beispielsweise eine Solltemperatur von + 4°C bis + 12°C. Welcher der beiden Thermostaten wirksam gemacht wird, wird vom Benutzer an einem Betätigungsfeld 23 an der Oberseite des Gehäuses 10 eingestellt. Dort ist im veranschaulichten Ausführungsbeispiel ferner eine Signallampe 24 angeordnet, die erkennen läßt, wenn der Kühlraum 15 die für die Entnahme der Kühlbox 12 vorgesehene Temperatur erreicht hat.

## Patentansprüche

1. Kühlvorrichtung zum Einbau in Kraftfahrzeuge, mit einem Kälteerzeuger und einem damit in Wirkungsverbindung stehenden Kühlraum zur Aufnahme von Kühlgut, **dadurch gekennzeichnet,** daß der Kälteerzeuger mit einer Aufnahmekammer (11) in Wirkungsverbindung steht, die ebenso wie der Kälteerzeuger selbst zur festen Montage in dem Kraftfahrzeug ausgelegt ist, und daß der Kühlraum (15) in einer transportablen Kühlbox (12) ausgebildet ist, die mit dem Kälteerzeuger in lösbarer Verbindung steht und die aus der Aufnahmekammer beliebig herausnehmbar bzw. in die Aufnahmekammer beliebig einsetzbar ist.

2. Kühlvorrichtung nach Anspruch 1, dadurch gekennzeichnet, daß die Kühlbox (12) als wärmeisolierter Behälter ausgebildet ist.

3. Kühlvorrichtung nach Anspruch 1 oder 2, dadurch gekennzeichnet, daß die Kühlbox (12) mit einem aufklappbaren Deckel (13) versehen ist.

4. Kühlvorrichtung nach einem der Ansprüche 1 bis 3, dadurch gekennzeichnet, daß der Kälteerzeuger in einem Gehäuse (10) untergebracht ist, in dem sich auch die Aufnahmekammer (11) für die transportable Kühlbox (12) befindet.

5. Kühlvorrichtung nach Anspruch 4, dadurch gekennzeichnet, daß in dem Gehäuse (12) ferner eine Steuer- und/oder Regeleinrichtung für den Kälteerzeuger untergebracht ist.

6. Kühlvorrichtung nach einem der vorhergehenden Ansprüche, dadurch gekennzeichnet, daß dem Kälteerzeuger eine Kaltluftumwälzeinrichtung zugeordnet ist, die, wenn die Kühlbox (12) in die Aufnahmekammer (11) eingesetzt ist, über einen Umwälzkreis Kaltluft in die Kühlbox eintreten läßt und Luft aus der Kühlbox wieder abführt.

7. Kühlvorrichtung nach Anspruch 6, dadurch gekennzeichnet, daß die Kühlbox (12) mit einem Kaltlufteinlaß (18) und einem Luftauslaß (19) versehen ist, die beim Einsetzen der Kühlbox in die Aufnahmekammer (11) an den Umwälzkreis selbsttätig angeschlossen werden und die beim Herausnehmen der Kühlbox aus der Aufnahmekammer selbsttätig verschlossen werden.

8. Kühlvorrichtung nach einem der vorhergehenden Ansprüche, dadurch gekennzeichnet, daß die Steuer- und Regeleinrichtung des Kälteerzeugers mit zwei Thermostaten ausgestattet ist, von denen der eine auf eine feste Solltemperatur eingestellt ist, auf die der Kühlraum (15) bei beabsichtigter Entnahme der Kühlbox (12) heruntergekühlt wird, während der andere Thermostat auf eine innerhalb eines vorgegebenen Bereichs verstellbare Solltemperatur einstellbar ist.

9. Kühlvorrichtung nach Anspruch 8, dadurch gekennzeichnet, daß dem die feste Solltemperatur vorgebenden Thermostaten eine Signallampe (24) zugeordnet ist, die erkennen läßt, wenn der Kühlraum (15) die für die Entnahme der Kühlbox (12) vorgesehene Temperatur erreicht hat.

10. Kühlvorrichtung nach einem der vorhergehenden Ansprüche, dadurch gekennzeichnet, daß der Kälteerzeuger als Kompressions-Kältemaschine ausgebildet ist.

11. Kühlvorrichtung nach einem der Ansprüche 1 bis 9, dadurch gekennzeichnet, daß der Kälteerzeuger als Adsorber-Kältemaschine ausgebildet ist.

12. Kühlvorrichtung nach einem der Ansprüche 1 bis 9, dadurch gekennzeichnet, daß der Kälteerzeuger als Peltier-Kältemaschine ausgebildet ist.

FIG. 1

FIG. 2

FIG. 3